# EUROPEAN PATENT APPLICATION

(11) **EP 0 583 206 A1**
(43) Date of publication of application: **16.02.1994**
(21) Application number: 93480090.5
(22) Date of filing: 30.06.1993
(51) Int. Cl.: G06F 3/033

(54) **Method of and apparatus for providing navigation to a hidden desktop window**

(30) Priority: 31.07.1992 US 923698
(71) Applicant: INTERNATIONAL BUSINESS MACHINES CORPORATION, Armonk, N.Y. 10504 (US)
(72) Inventor: Johnson, William J., Flower Mound, TX 75029 (US); Lachman, Larry M., Irving, TX 76039 (US)
(74) Representative: de Pena, Alain

(57) **Abstract**

Automatic navigation in a multitasking windowing environment to a hidden window is provided. A user may invoke a number of application programs which focus panels and other objects onto a desktop producing a cluttered desktop in which one or more windows are hidden. The user is provided a capability to automatically pop into the foreground of the desktop the most hidden window or a plurality of hidden windows. The selection of which hidden windows to pop into the foreground is based on a priority. The priority is based on an area of a window covered by other windows and how many other windows are covering the window. A queue of the hidden windows and their associated priority is maintained so that the user may pop one or more hidden windows from the queue into the foreground upon invocation.

## Description

This invention relates in general to data processing systems, and in particular to a method of, and apparatus for, providing automatic navigation in a multitasking windowing environment to a hidden window.

Existing data processing systems may provide capabilities for navigating between multiple windows displayed by a multitasking windowing environment. The window currently selected by a user for display in the foreground and for active input is known as the window having focus. The user may change the focus by use of either an implicit focus model or an explicit focus model.

In an implicit focus model, such as that provided by the Open Software Foundation, Inc.'s "OSF/MOTIF"TM Windowing Environment, the focus is automatically changed to that window upon which the mouse controlled cursor or pointer resides. When the user moves the cursor on to a portion of a window which is partially hidden, the window automatically pops into focus so that the entire window is then visible.

In an explicit focus model, such as that provided by the International Business Machines Corp.'s "PRESENTATION MANAGER"TM windowing environment, the focus is only changed by the user upon an explicit command from the user. If the user wishes to change the focus, then the user moves the pointer on to a portion of a window which is partially hidden, and then the user clicks the mouse to pop the window into focus so that the entire window is then visible. Alternatively, under some explicit focus models, the user may be able to issue explicit commands from a keyboard such as a NEXT WINDOW command or a PREVIOUS WINDOW command. A NEXT WINDOW command changes the focus to a window which first gained focus after the currently displayed window. A PREVIOUS WINDOW command changes the focus to a window which had focus just prior to the currently displayed window. These commands allow the user to navigate through a window queue which is sorted in an order in which the various windows first gained focus.

Consider a situation in a multitasking windowing environment where a user has a cluttered desktop. There are so many application windows on the screen that one or more application windows are hidden or "lost" below other windows. If the user wishes to see one of these hidden application windows, then the cluttered desktop creates a burden on the user because time must be spent minimizing windows to icons and/or rearranging their position on the screen manually to find an application window that is not clearly visible. In this situation, it may be desirable to display the application windows and objects that are hidden or most concealed, in a fast, convenient manner. A method is needed whereby the windows or objects that are hidden or most concealed end up easily accessible in the foreground.

Note that under the existing focus models, the user may only change the focus based on either the location of a pointer on the display, or on the location of a window in a window queue. However, if a user desires to change the focus to a window based on the hidden nature of the window, no capability is provided by existing systems. If the user desires to change the focus to a window based on the hidden nature of the window, then existing systems fail to change the focus to the desired window. In existing systems, the user may have to minimize windows to icons or rearrange their positions on the screen manually to find an application window that is not clearly visible.

Thus, existing systems provide no method of, or apparatus for, providing automatic navigation in a multitasking windowing environment to a window based on the hidden nature of the window. As such, there is a need for a method of, and apparatus for, providing automatic navigation in a multitasking windowing environment to a window based on the hidden nature of the window.

The invention disclosed herein comprises a method of, and apparatus for, providing automatic navigation in a multitasking windowing environment to a window based on the hidden nature of the window. The method and apparatus described herein substantially eliminate or reduce the difficulties of existing systems when attempting to navigate to a hidden window.

In accordance with one aspect of the present invention, automatic navigation to a hidden window is provided.

Another aspect of this invention is that automatic navigation to a most hidden window is provided.

Another aspect of this invention is that a plurality of hidden windows may automatically be brought to the foreground.

Another aspect of this invention is that a hidden window may be popped into the foreground based on a priority wherein the priority is determined by the degree to which the hidden window is hidden or concealed.

The present invention has the advantage of allowing a user to pop a hidden window into focus on a desktop without tedious manual desktop object relocation.

The present invention has the further advantage of providing a rearrangement of the desktop where the most hidden objects are popped to the foreground.

For a more complete understanding of the present invention and the advantages thereof, reference is now made to the Detailed Description in conjunction with the attached Drawings, in which:
Figure 1 is a block diagram of a data processing system used in performing the method of the present invention and forming part of the apparatus of the present invention;
Figure 2 and Figure 3 illustrate a preferred embodiment of the present invention;
Figure 4 is a flowchart illustrating the operations preferred in carrying out the Queue Process portion of the present invention;
Figure 5 is a flowchart, continued from Figure 4, illustrating the operations preferred in carrying out the Queue Process portion of the present invention; and
Figure 6 is a flowchart illustrating the operations preferred in carrying out the Dequeue Process portion of the present invention.

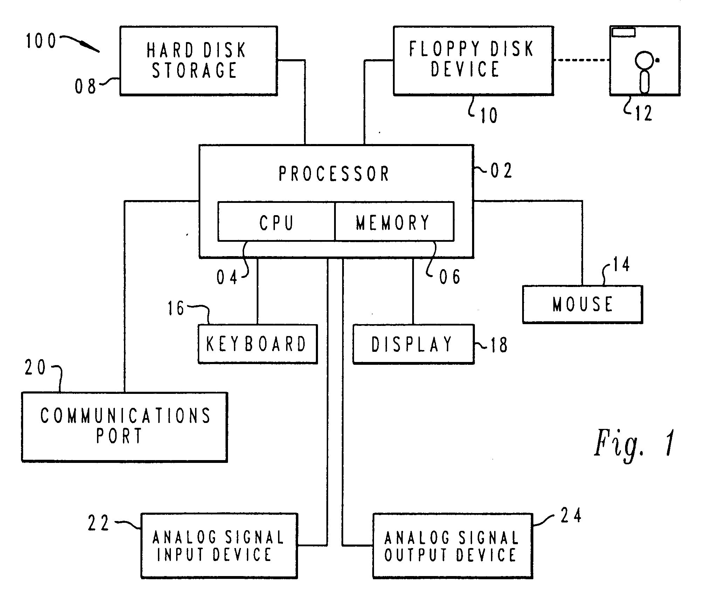

Referring first to Figure 1, there is shown in block diagram form, a data processing system 100 according to the present invention. The data processing system 100 includes a processor 02, which includes a central processing unit (CPU) 04, and a memory 06. Additional memory, in the form of a hard disk file storage 08 and a floppy disk device 10, is connected to the processor 02. Floppy disk device 10 receives a diskette 12 which has computer program code recorded thereon that implements the present invention in the data processing system 100. The data processing system 100 may include user interface hardware, including a mouse 14 and a keyboard 16 for allowing user input to the processor 02 and a display 18 for presenting visual data to the user. The data processing system 100 may also include a communications port 20 for communicating with a network or other data processing systems. The data processing system 100 may also include analog signal devices, including an analog signal input device 22 for entering analog signals into the data processing system 100, and an analog signal output device 24 for reproducing analog signals.

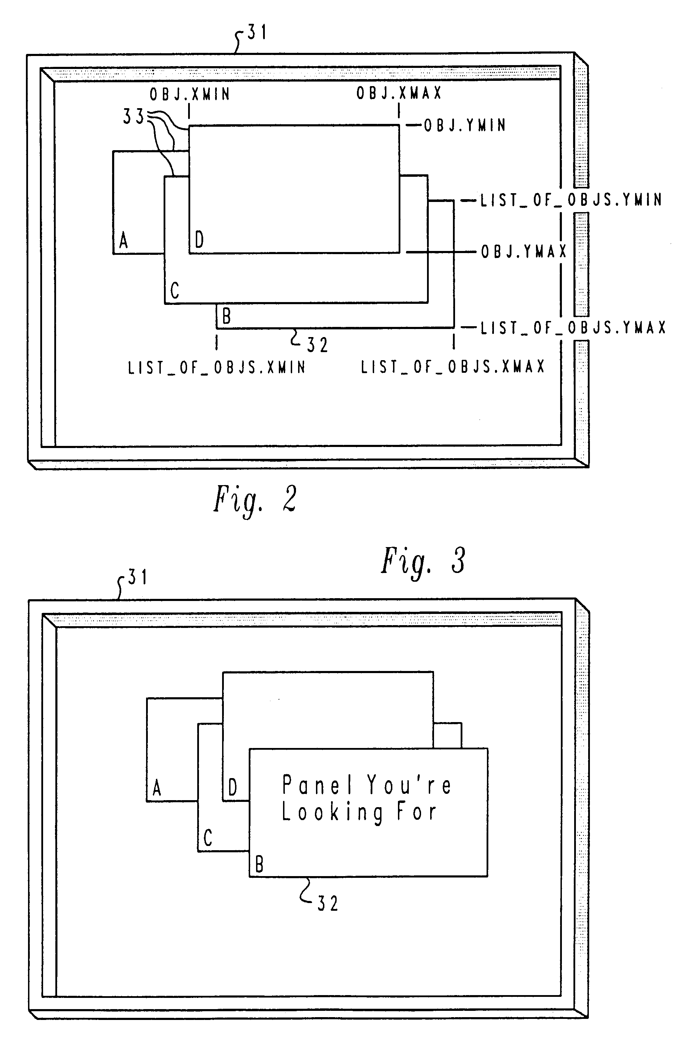

Referring now to Figure 2 and Figure 3, a preferred embodiment of the present invention is illustrated. In accordance with the present invention, automatic navigation to a hidden window is provided. The window may be partially hidden, fully hidden, or iconized. A user may invoke a number of application programs which focus panels and other objects onto a desktop producing a cluttered desktop in which one or more windows are hidden. Figure 2 illustrates a desktop 31 where panel B 32 is blocked out of view by other panels 33. The present invention allows panel B 32, the most hidden panel, to be automatically popped into focus. Figure 3 illustrates desktop 31 after the panel B 32 is found and brought to the foreground so that it may be viewed.

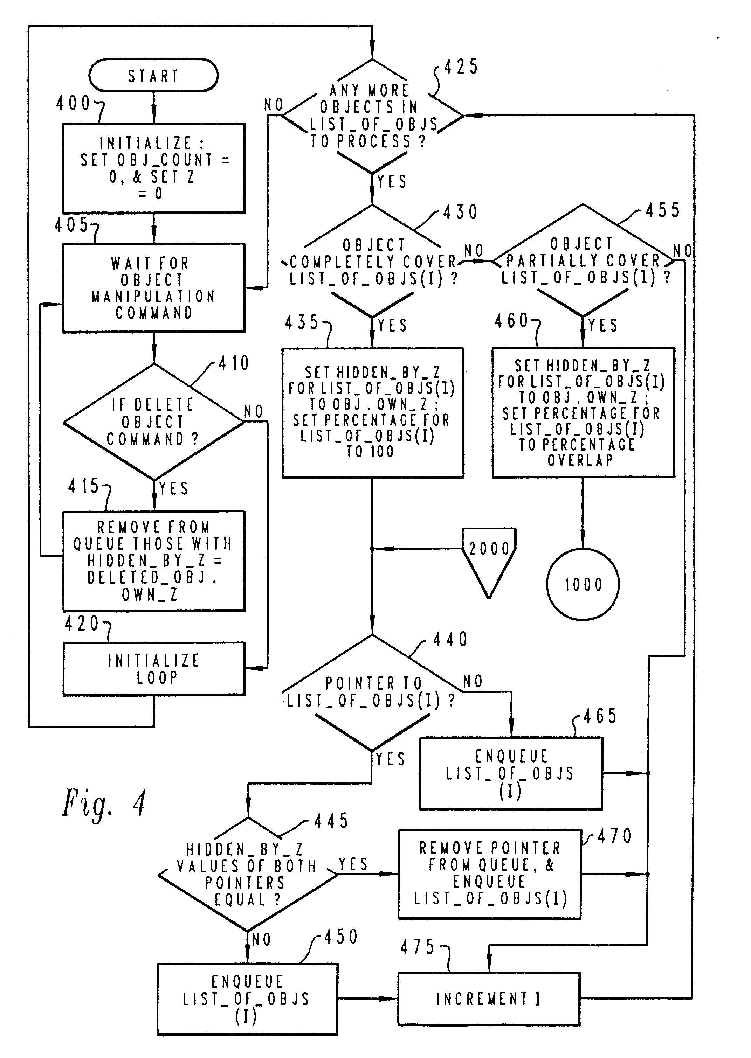

Referring now to Figure 4 through Figure 6, flowcharts illustrating operations preferred in carrying out the present invention are shown. In the flowcharts, the graphical conventions of a diamond for a test or decision and a rectangle for a process or function are used. These conventions are well understood by those skilled in the art, and the flowcharts are sufficient to enable one of ordinary skill to write code in any suitable computer programming language.

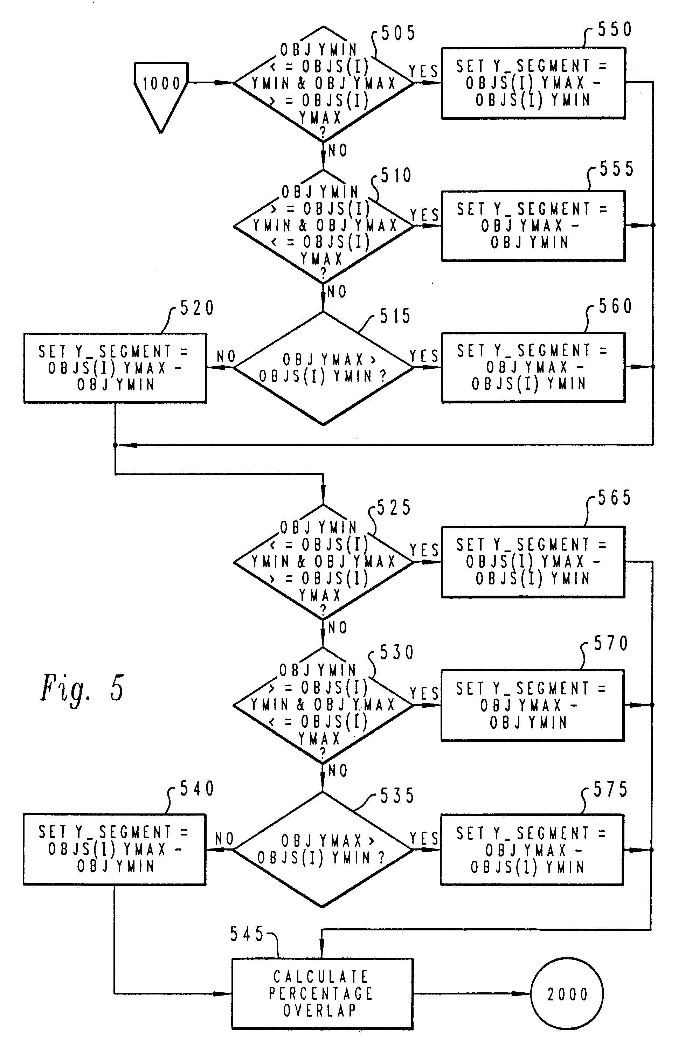

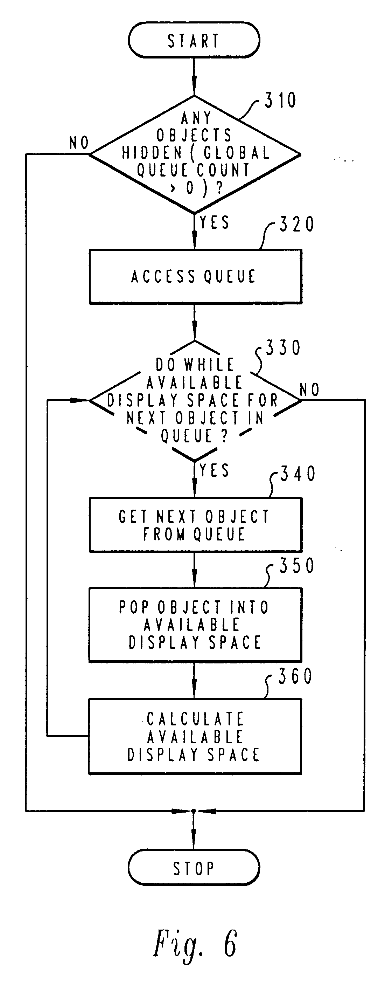

The operations preferred in carrying out the present invention are implemented as two processes or programs comprising a Queue Process and a Dequeue Process. The Queue Process, illustrated in Figure 4 and Figure 5, maintains a priority queue pointing to objects that are totally or partially hidden. The Dequeue Process, illustrated in Figure 6, accesses the queue and pops a hidden object pointed to by the queue into the foreground of the desktop.

In the Queue Process, each object is assigned a z-value upon creation, or reassigned a z-value upon resizing or movement of the object. The current z-value is incremented with each object creation or manipulation. The highest z-value represents the most recently manipulated object. The lowest z-value represents the oldest manipulated object. This z-value is used for the First Come First Served (FCFS) determination of more than one hidden object in the Dequeue process. After creation or manipulation, the extent of the object is recorded, and then compared against every other object on the desktop. If a compared object is totally or partially hidden by the new or manipulated object, the compared object is enqueued in the priority queue, irregardless if there may be other previous queue pointers to that object in the queue (totally or partially hidden by other objects). The priority queue establishes priority on the basis of the percentage of object covered (with 100 being the highest value). For objects with the same percentage of coverage, the z-value resolves the priority; the lowest z-value represents highest priority. The hidden object also contains the z-value of the object covering it (which caused the object to be enqueued).

If the compared object is not totally hidden, but rather partially hidden, the compared object's overlap is calculated with the new or manipulated object. The area of the overlap is divided by the area of the compared object to obtain the hidden percentage of the object. Before the object is enqueued, the queue is scanned to see if a pointer to this object is currently in the queue. If no pointer exists, the object is enqueued. If the queue does contain a pointer to this object, the z-values are compared (i.e. the z-values of the object covering the object in question). If the z-values are equal, the previous pointer is discarded (i.e. the same object that caused this object to be enqueued before has just been manipulated, so no matter how much it covered this object before, that value is now invalid) and the object is enqueued. If the z-values are not equal, (we are comparing a different/new object than the one used to enqueue the object before) the new pointer to this object is enqueued, It will not be a problem if there are more than one pointer to an object in the queue as the Dequeue Process will dequeue the pointer with the highest percentage of coverage (the most hidden).

Referring now to Figure 4, which illustrates the operations preferred in carrying out the Queue Process portion of the present invention, after the start of the program, process block 400 sets a variable OBJ_COUNT equal to zero. The variable OBJ_COUNT represents a number of objects on the desktop. Process block 400 also sets a variable GLOBAL_QUEUE_COUNT equal to zero. The variable GLOBAL_QUEUE_COUNT represents a number of hidden objects on the desktop. Process block 400 also sets a variable Z equal to zero. The variable Z represents a number of manipulations performed on objects on the desktop. Thereafter, process block 405 awaits detection of a window object manipulation command. The window manipulation command may be a NEW_OBJECT, DELETE_OBJECT, RESIZE_OBJECT, MOVE_OBJECT, or any other command which may cause a windowing object to overlap or hide another windowing object. For example, a NEW_OBJECT command by creating a new object on the desktop may partially obscure an existing object on the desktop. A DELETE_OBJECT command by removing an object from the desktop may uncover an object which was previously obscured by the deleted object. A RESIZE_OBJECT command by changing the size of the object may either uncover or obscure other objects on the desktop. A MOVE_OBJECT command by changing the position of the object may either uncover or obscure other objects on the desktop. After process block 405 detects a window object manipulation command, decision block 410 determines if the windowing command is a DELETE_OBJECT command. If the window object manipulation command is a DELETE_OBJECT command, then process block 415 removes any pointers in the queue that have a HIDDEN_BY_Z value equal to the OWN_Z of the deleted object (DELETED_OBJ). The OWN_Z variable represents the z-value of the object or the order in which the object was manipulated. The HIDDEN_BY_Z value of an object represents the z-value of a manipulated object that completely or partially covers the object. For example, if a first object with an OWN_Z equal to three (the third object manipulated) is completely or partially hidden by a second object with an OWN_Z equal to nine (the ninth object manipulated), then the HIDDEN_BY_Z of the first object will be set to nine which is the OWN_Z or z-value of the second object covering the first object. Process block 415 also decrements OBJ_COUNT by one. Thereafter, the program loops back to process block 405 to await the next window object manipulation command.

Returning now to decision block 410, if the windowing command is not a DELETE_OBJECT command, then process block 420 initializes variables for a loop to process the command. Process block 420 sets a variable OBJ.OWN_Z equal to Z and increments Z by one. Process block 420 also records the object's extent by setting a variable OBJ.XMIN equal to the x-axis displacement of the left edge of the object from the left edge of the desktop, a variable OBJ.XMAX equal to the x-axis displacement of the right edge of the object from the left edge of the desktop, a variable OBJ.YMIN equal to the y-axis displacement of the top edge of the object from the top edge of the desktop, and a variable OBJ.YMAX equal to the y-axis displacement of the bottom edge of the object from the top edge of the desktop. Process block 420 also calculates the object's area by calculating the difference between OBJ.XMAX and OBJ.XMIN, calculating the difference between OBJ.YMAX and OBJ.YMIN, multiplying the two differences, and storing the product to OBJ.AREA. Process block 420 also sets an index I equal to zero. The index I is used by the loop to index a list of the objects on the desktop, LIST_OF_OBJS. If the window command is a NEW_OBJECT command, then process block 420 also increments OBJ_COUNT by one.

Thereafter, decision block 425 determines if there are any more objects in LIST_OF_OBJS to process by determining if I is less than or equal to OBJ_COUNT. If there are any more objects in LIST_OF_OBJS to process, then decision block 430 determines if the extent of the current object completely covers LIST_OF_OBJS[I]. The extent of the current object completely covers LIST_OF_OBJS[I] if the XMIN of LIST_OF_OBJS[I] is greater than or equal to the XMIN of the current object, and the XMAX of LIST_OF_OBJS[I] is less than or equal to XMAX of the current object, and the YMIN of LIST_OF_OBJS[I] is greater than or equal to the YMIN of the current object, and the YMAX of LIST_OF_OBJS[I] is less than or equal to the YMAX of the current object. If the extent of the current object completely covers LIST_OF_OBJS[I], then process block 435 sets a variable LIST_OF_OBJS[I].HIDDEN_BY_Z equal to OBJ.OWN_Z, thus giving the totally hidden object, LIST_OF_OBJS[I], the same z-value as the current object which totally covers LIST_OF_OBJS[I]. The variable LIST_OF_OBJS[I].HIDDEN_BY_Z represents the z-value of an object that completely or partially covers LIST_OF_OBJS[I]. Process block 435 also sets a variable LIST_OF_OBJS[I].PERCENTAGE equal to 100, thus indicating that the object LIST_OF_OBJS[I] is totally hidden. The variable LIST_OF_OBJS[I].PERCENTAGE represents the percentage of object LIST_OF_OBJS[I] that is covered by the current object.

Thereafter, decision block 440 determines if a pointer to LIST_OF_OBJS[I] exists in the queue. If a pointer to LIST_OF_OBJS[I] does not exist in the queue, then process block 465 adds to the back of the queue a pointer to LIST_OF_OBJS[I]. Process block 465 also increments GLOBAL_QUEUE_COUNT by one. Thereafter, process block 475 increments I by one. Thereafter, the program loops back to decision block 425 to process the next object in LIST_OF_OBJS.

Returning now to decision block 440, if a pointer to LIST_OF_OBJS[I] does exist in the queue, then decision block 445 determines if the HIDDEN_BY_Z values of the current object and LIST_OF_OBJS[I] are equal. If the HIDDEN_BY_Z values of the current object and LIST_OF_OBJS[I] are equal, then process block 470 removes from the queue the pointer to the current object and adds to the back of the queue a pointer to LIST_OF_OBJS[I]. Thereafter, control passes to process block 475 to increment the index I.

Returning now to decision block 445, if the HIDDEN_BY_Z values of the current object and LIST_OF_OBJS[I] are not equal, then process block 450 adds to the back of the queue a pointer to LIST_OF_OBJS[I]. Process block 450 also increments GLOBAL_QUEUE_COUNT by one. Thereafter, control passes to process block 475 to increment the index I.

Returning now to decision block 430, if the extent of the current object does not completely cover LIST_OF_OBJS[I], then decision block 455 determines if the extent of the current object partially covers LIST_OF_OBJS[I]. Decision block 455 accomplishes this by testing if the current object does not overlap LIST_OF_OBJS[I]. Since this decision test is performed only if the current object does not completely cover LIST_OF_OBJS[I] (decision block 430), then a test result of FALSE indicates that the current object must partially cover LIST_OF_OBJS[I]. The extent of the current object partially covers LIST_OF_OBJS[I] if the current object neither completely covers nor does not overlap in any way LIST_OF_OBJS[I]. Thus, the extent of the current object does not overlap in any way LIST_OF_OBJS[I] if the XMIN of LIST_OF_OBJS[I] is greater than or equal to the XMAX of the current object, or the XMAX of LIST_OF_OBJS[I] is less than or equal to XMIN of the current object, or the YMIN of LIST_OF_OBJS[I] is greater than or equal to the YMAX of the current object, or the YMAX of LIST_OF_OBJS[I] is less than or equal to the YMIN of the current object. If the extent of the current object partially covers LIST_OF_OBJS[I], then process block 460 sets the variable LIST_OF_OBJS[I].HIDDEN_BY_Z equal to OBJ.OWN_Z, thus giving the partially hidden object, LIST_OF_OBJS[I], the same z-value as the current object which partially covers LIST_OF_OBJS[I]. Thereafter, control passes to decision block 505 on Figure 5, as illustrated by flowchart connectors 1000 on Figure 4 and Figure 5, for calculation of a percentage of overlap.

Returning now to decision block 455, if the extent of the current object does not partially cover LIST_OF_OBJS[I], then the current object and LIST_OF_OBJS[I] do not overlap, and control passes to process block 475 to increment the index I.

Referring now to Figure 5, after control passes from process block 460 on Figure 4 to decision block 505 on Figure 6, as illustrated by flowchart connectors 1000 on Figure 4 and Figure 5, decision block 505 determines if the current object YMIN is less than or equal to the YMIN of LIST_OF_OBJS[I] and the current object YMAX is greater than or equal to the YMAX of LIST_OF_OBJS[I]. This is a situation where the current object's upper boundary is above the upper boundary of LIST_OF_OBJS[I], and where the current object's lower boundary is below the lower boundary of LIST_OF_OBJS[I]. If the current object YMIN is less than or equal to the YMIN of LIST_OF_OBJS[I] and the current object YMAX is greater than or equal to the YMAX of LIST_OF_OBJS[I], then process block 550 sets a variable Y_SEGMENT equal to the difference of the YMAX of LIST_OF_OBJS[I] minus the YMIN of LIST_OF_OBJS[I]. The variable Y_SEGMENT represents the y-axis segment of overlap of the current object and LIST_OF_OBJS[I]. Thereafter, control passes to decision block 525 to calculate a variable X_SEGMENT which represents the x-axis segment of overlap of the current object and LIST_OF_OBJS[I].

Returning now to decision block 505, if it is not the case that the current object YMIN is less than or equal to the YMIN of LIST_OF_OBJS[I] and the current object YMAX is greater than or equal to the YMAX of LIST_OF_OBJS[I], then decision block 510 determines if the current object YMIN is greater than or equal to the YMIN of LIST_OF_OBJS[I] and the current object YMAX is less than or equal to the YMAX of LIST_OF_OBJS[I]. This is a situation where the current object's upper boundary is below the upper boundary of LIST_OF_OBJS[I], and where the current object's lower boundary is above the lower boundary of LIST_OF_OBJS[I]. If the current object YMIN is greater than or equal to the YMIN of LIST_OF_OBJS[I] and the current object YMAX is less than or equal to the YMAX of LIST_OF_OBJS[I], then process block 555 sets the variable Y_SEGMENT equal to the difference of the YMAX of the current object minus the YMIN of the current object. Thereafter, control passes to decision block 525 to calculate a variable X_SEGMENT which represents the x-axis segment of overlap of the current object and LIST_OF_OBJS[I].

Returning now to decision block 510, if it is not the case that the current object YMIN is greater than or equal to the YMIN of LIST_OF_OBJS[I] and the current object YMAX is less than or equal to the YMAX of LIST_OF_OBJS[I], then decision block 515 determines if the current object YMAX is greater than the YMIN of LIST_OF_OBJS[I]. This is a situation where the current object's lower boundary is below the upper boundary of LIST_OF_OBJS[I]. If the current object YMAX is greater than the YMIN of LIST_OF_OBJS[I], process block 560 sets the Y_SEGMENT equal to the difference of the YMAX of the current object minus the YMIN of LIST_OF_OBJS[I]. Thereafter, control passes to decision block 525 to calculate a variable X_SEGMENT which represents the x-axis segment of overlap of the current object and LIST_OF_OBJS[I].

Returning now to decision block 515, if the current object YMAX is not greater than the YMIN of LIST_OF_OBJS[I], then process block 520 sets the Y_SEGMENT equal to the difference of the YMAX of LIST_OF_OBJS[I] minus the YMIN of the current object. This is a situation where the current object's upper boundary is above the lower boundary of LIST_OF_OBJS[I].

Thereafter, decision block 525 determines if the current object XMIN is less than or equal to the XMIN of LIST_OF_OBJS[I] and the current object XMAX is greater than or equal to the XMAX of LIST_OF_OBJS[I]. This is a situation where the current object's left boundary is to the left of the left boundary of LIST_OF_OBJS[I], and where the current object's right boundary is to the right of the right boundary of LIST_OF_OBJS[I]. If the current object XMIN is less than or equal to the XMIN of LIST_OF_OBJS[I] and the current object XMAX is greater than or equal to the XMAX of LIST_OF_OBJS[I], then process block 565 sets a variable X_SEGMENT equal to the difference of the XMAX of LIST_OF_OBJS[I] minus the XMIN of LIST_OF_OBJS[I]. The variable X_SEGMENT represents the x-axis segment of overlap of the current object and LIST_OF_OBJS[I]. Thereafter, control passes to process block 545 to calculate a variable LIST_OF_OBJS[I]. PERCENTAGE which represents the percentage area of overlap of the current object and LIST_OF_OBJS[I].

Returning now to decision block 525, if it is not the case that the current object XMIN is less than or equal to the XMIN of LIST_OF_OBJS[I] and the current object XMAX is greater than or equal to the XMAX of LIST_OF_OBJS[I], then decision block 530 determines if the current object XMIN is greater than or equal to the XMIN of LIST_OF_OBJS[I] and the current object XMAX is less than or equal to the XMAX of LIST_OF_OBJS[I]. This is a situation where the current object's left boundary is to the right of the left boundary of LIST_OF_OBJS[I], and where the current object's right boundary is to the left of the right boundary of LIST_OF_OBJS[I]. If the current object XMIN is greater than or equal to the XMIN of LIST_OF_OBJS[I] and the current object XMAX is less than or equal to the XMAX of LIST_OF_OBJS[I], then process block 570 sets the variable X_SEGMENT equal to the difference of the XMAX of the current object minus the XMIN of the current object. Thereafter, control passes to decision block 545.

Returning now to decision block 530, if it is not the case that the current object XMIN is greater than or equal to the XMIN of LIST_OF_OBJS[I] and the current object XMAX is less than or equal to the XMAX of LIST_OF_OBJS[I], then decision block 535 determines if the current object XMAX is greater than the XMIN of LIST_OF_OBJS[I]. This is a situation where the current object's right boundary is to the right of the left boundary of LIST_OF_OBJS[I]. If the current object XMAX is greater than the XMIN of LIST_OF_OBJS[I], process block 575 sets the X_SEGMENT equal to the difference of the XMAX of the current object minus the XMIN of LIST_OF_OBJS[I]. Thereafter, control passes to decision block 545.

Returning now to decision block 535, if the current object XMAX is not greater than the XMIN of LIST_OF_OBJS[I], then process block 540 sets the X_SEGMENT equal to the difference of the XMAX of LIST_OF_OBJS[I] minus the XMIN of the current object. This is a situation where the current object's left boundary is to the left of the right boundary of LIST_OF_OBJS[I].

Thereafter, process block 545 calculates an area of LIST_OF_OBJS[I] partially covered by taking the product of Y_SEGMENT times X_SEGMENT. Process block 545 also calculates a percentage of LIST_OF_OBJS[I] which is partially covered by the current object and sets the variable LIST_OF_OBJS[I].PERCENTAGE to this percentage. This percentage is calculated by taking the product of one hundred times the area of LIST_OF_OBJS[I] partially covered divided by the variable LIST_OF_OBJS[I].area, the area of LIST_OF_OBJS[I].

Thereafter, control passes to decision block 440 on Figure 4 to update queue pointers. This processing path is illustrated by flowchart connectors 2000 on Figure 5 and Figure 4.

Referring now to Figure 6, which illustrates the operations preferred in carrying out the Dequeue Process portion of the present invention, after the start of the program, decision block 310 determines if there are any hidden objects. There are hidden objects if the GLOBAL_QUEUE_COUNT is greater than zero. If there are any hidden objects, then process block 320 accesses the queue. Thereafter, decision block 330 determines if there is sufficient available display space on the desktop to display the next hidden object in the queue. Sufficient available display space does not include display space occupied by objects popped into the foreground by the Dequeue Process, but does includes display space occupied by objects which have not been popped into the foreground by the Dequeue Process. This determination is made by comparing the extent of the next hidden object to the extent of the available display space on the desktop. If there is sufficient available display space on the desktop to display the next hidden object in the queue, then process block 340 gets the next object from the queue, removes the pointer to that object, and decrements the GLOBAL_QUEUE_COUNT. Note that the next object in the queue is that object with the largest percentage value, that is the object that is most hidden. If more than one object has the same percentage value, then the object with the lowest own_z value is next. Thereafter, process block 350 pops the object into a foreground portion of the desktop. Thereafter, process block 360 calculates the extent of the available display space on the desktop after the object has been popped into the foreground. Thereafter, the program loops back to decision block 330 to process the next object in the queue.

Returning now to decision block 330, if there is not sufficient available display space on the desktop to display the next hidden object in the queue, then the program terminates.

Returning now to decision block 310, if there are not any hidden objects (if GLOBAL_QUEUE_COUNT equals zero), then the program terminates.

In an alternative embodiment of the Dequeue Process, process block 340 gets a next object from the queue where the next object in the queue is that object with the largest percentage value, that is the object that is most hidden. In this alternative embodiment, process block 340 does not select the object with the lowest ow_z value if more than one object has the same percentage value.

In another alternative embodiment of the Dequeue Process, only a single most hidden object from the queue is popped into the foreground of the desktop.

In another alternative embodiment of the Dequeue Process, process block 340 tiles the objects on the desktop in an overlapping manner which allows each object's title bar to be visible.

## Claims

1. A method of providing automatic navigation in a multitasking windowing environment to a hidden window, said method comprising the steps of:
determining that the hidden window is hidden; and
displaying the hidden window in a foreground portion of the multitasking windowing environment.

2. The method of claim 1, wherein the step of determining that the hidden window is hidden further comprises the step of:
comparing an extent of the hidden window to an extent of another window displayable by the multitasking windowing environment.

3. The method of claim 2, wherein the step of comparing an extent of the hidden window to an extent of another window displayable by the multitasking windowing environment further comprises the steps of:
intercepting a window manipulation command;
identifying a manipulated window that is manipulated by the window manipulation command; and
comparing the extent of the hidden window to an extent of the manipulated window.

4. The method of claim 2, wherein the step of comparing an extent of the hidden window to an extent of another window displayable by the multitasking windowing environment further comprises the steps of:
accessing a table describing a plurality of windows displayable by the multitasking windowing environment;
comparing the extent of the hidden window to an extent of each of the plurality of windows displayable by the multitasking windowing environment.

5. The method of claim 1, wherein the step of displaying the hidden window in a foreground portion of the multitasking windowing environment further comprises the step of:
selecting the hidden window to be displayed based on a priority, wherein the priority is determined by an extent of the hidden window that is hidden.

6. The method of claim 1, wherein the step of displaying the hidden window in a foreground portion of the multitasking windowing environment further comprises the step of:
selecting the hidden window to be displayed based on a priority, wherein the priority is determined by a number of windows that overlap the hidden window.

7. The method of claim 1, wherein the step of displaying the hidden window in a foreground portion of the multitasking windowing environment further comprises the steps of:
determining an available display area in which one of a plurality of hidden windows may be displayed;
displaying one of the plurality of hidden windows;
determining a remaining available display area after the one of the plurality of hidden windows is displayed; and
repeating the steps of determining an available display area in which one of a plurality of hidden windows may be displayed, displaying one of the plurality of hidden windows, and determining a remaining available display area after the one of the plurality of hidden windows is displayed, until the remaining available display area is not sufficient to display a next one of the plurality of hidden windows.

8. An apparatus for providing automatic navigation in a multitasking windowing environment to a hidden window, said apparatus comprising:
means for determining that the hidden window is hidden; and
means for displaying the hidden window in a foreground portion of the multitasking windowing environment.

9. The apparatus of claim 8, wherein the means for determining that the hidden window is hidden further comprises:
means for comparing an extent of the hidden window to an extent of another window displayable by the multitasking windowing environment.

10. The apparatus of claim 9, wherein the means for comparing an extent of the hidden window to an extent of another window displayable by the multitasking windowing environment further comprises:
means for intercepting a window manipulation command;
means for identifying a manipulated window that is manipulated by the window manipulation command; and
means for comparing the extent of the hidden window to an extent of the manipulated window.

11. The apparatus of claim 9, wherein the means for comparing an extent of the hidden window to an extent of another window displayable by the multitasking windowing environment further comprises:
means for accessing a table describing a plurality of windows displayable by the multitasking windowing environment;
means for comparing the extent of the hidden window to an extent of each of the plurality of windows displayable by the multitasking windowing environment.

12. The apparatus of claim 8, wherein the means for displaying the hidden window in a foreground portion of the multitasking windowing environment further comprises:
means for selecting the hidden window to be displayed based on a priority, wherein the priority is determined by an extent of the hidden window that is hidden.

13. The apparatus of claim 8, wherein the means for displaying the hidden window in a foreground portion of the multitasking windowing environment further comprises:
means for selecting the hidden window to be displayed based on a priority, wherein the priority is determined by a number of windows that overlap the hidden window.

14. The apparatus of claim 8, wherein the means for displaying the hidden window in a foreground portion of the multitasking windowing environment further comprises:
means for determining an available display area in which one of a plurality of hidden windows may be displayed;
means for displaying one of the plurality of hidden windows;
means for determining a remaining available display area after the one of the plurality of hidden windows is displayed; and
means for repeating the steps of determining an available display area in which one of a plurality of hidden windows may be displayed, displaying one of the plurality of hidden windows, and determining a remaining available display area after the one of the plurality of hidden windows is displayed, until the remaining available display area is not sufficient to display a next one of the plurality of hidden windows.
